# EUROPEAN PATENT SPECIFICATION

(11) **EP 2 333 597 B1**
(45) Date of publication and mention of the grant of the patent: **21.09.2016**
(21) Application number: 10014583.8
(22) Date of filing: 13.11.2010
(51) Int. Cl.: G02B 6/38, G02B 6/44

(54) **Fiber optic module assembly and associated methods**
Glasfasermodulanordnung und entsprechende Verfahren
Ensemble de module à fibres optiques et procédés associés

(30) Priority: 30.11.2009 US 265047 P
(43) Date of publication of application: 15.06.2011
(73) Proprietor: Corning Optical Communications LLC, Hickory, NC 28601 (US)
(72) Inventor: Lewallen, C. Paul, Hudson NC 28638 (US); Luther, James P., Hickory NC 28602 (US); Melton, Stuart R., Hickory NC 28601 (US); Norris, Martin E., Lenoir NC 28645 (US); Theuerkorn, Thomas, Hickory NC 28601 (US)
(74) Representative: Sturm, Christoph

(56) References cited:
- KR-A- 20070 122 191
- US-A- 5 138 678
- US-A1- 2007 140 642
- US-B1- 6 695 620

## Description

### RELATED APPLICATION:

The present application is related to U.S. Pat. App. Ser. No. 61/265038 titled "Articulated Strain Relief Boot on a Fiber Optic Module and Associated Methods" filed on even date herewith.

### FIELD

The disclosure relates generally to fiber optic assemblies and more particularly to fiber optic module assemblies which may be used in fiber optic assemblies.

### TECHNICAL BACKGROUND

Telecommunications systems use data centers to collect, process and redistribute large amounts of electronic and digital information. Fiber optics has ushered in a faster and more efficient means of performing this basic function, enabling smaller data centers to perform at higher capacities than conventional copper based systems. Design of fiber optic based data centers reflects this capability of small area to high capacity. Consequently, cramped data centers are more the rule than the exception. Routing of cables, arrangement of racks and hierarchy of shelves are considerations that the data center designer must contend with using smaller and smaller spaces.

A typical data center receives trunk cables into a Main Distribution Area (MDA) where the signals are usually split using optical splitters and sent forward via high fiber count cables. High fiber count cabling in the MDA is sent to a Zone Distribution Area (ZDA) where the signals are redistributed and fiber counts are reduced, and sent on to an appropriate region or zone of an Equipment Distribution Area (EDA), and from there the signals are sent to end user interface. Sometimes, in smaller data centers, the signals are sent directly from the MDA to the EDA, bypassing a ZDA altogether.

Raceways for routing cables above rack mounted hardware and subfloors for routing cables below rack mounted hardware are commonplace in this architecture and provide acceptable solutions for cable overcrowding. However, a fully populated data center can present a challenge for moves, adds and changes. More capacity and updated hardware are frequently needed and can be difficult to install, increasing downtime and expense. A fiber optic module assembly that facilitates quick and easy installation from the MDA to either the ZDA or the EDA, or from the ZDA to the EDA, is needed to keep costs and installation time to a minimum.

US 2007/140642 A1 discloses a fiber optic module assembly according to the preamble of claim 1. Other prior art assemblies are known from US 5 138 678 A, from KR 2007 0122191 A and from US 6 695 620 B1.

### SUMMARY

The fiber optic module assembly according to the present invention is defined in claim 1.

The disclosure is further directed to a fiber optic module assembly having an articulated strain relief boot that pivots and rotates to facilitate attachment and cable management.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

**FIG.1** is a perspective view of a fiber optic module assembly;
**FIG. 2** is a partially exploded view of the fiber optic module assembly of **FIG. 1****;**
**FIG. 3** is a partially assembled, perspective view of the fiber optic module assembly of **FIGS. 1** **and** **2** having a housing cover portion removed;
**FIG. 4** is a side profile view of the fiber optic module assembly of FIG. 1;
**FIG. 5** is a partial cross-sectional detail of the embodiment of FIG. 4 revealing dissimilar optical connector assemblies mating across components of a modular connector interface assembly;
**FIG. 6** is a perspective view of a modular connector interface assembly of **FIGS. 1-5****;**
**FIGS. 7A-7B** are two perspective views of a first connector interface plate;
**FIGS. 8A-8B** are two perspective views of a second connector interface plate;
**FIG. 9** is an embodiment of an installation scheme having the fiber optic module assembly of **FIG. 1** installed on a side of a mounting structure;
**FIG. 10A-10B** depict an alternate embodiment of a fiber optic module assembly having an optical connector-adapter assembly with a close-up view of an articulated strain relief boot;
**FIGS. 11A-11B** show the fiber optic module assembly of **FIGS. 10A** and **10B** installed on a mounting structure having a swing-out panel;
**FIGS. 12** is the optical connector-adapter assembly of **FIG. 10A****;**
**FIG. 13** is a cross-sectional view of the optical connector-adapter assembly of **FIG. 12****;**
**FIG. 14A** is an optical connector-adapter half of the optical connector-adapter assembly of **FIG. 12****;**
**FIG. 14B** is an optical connector-adapter insert of the optical connector-adapter assembly of **FIG. 12****;**
**FIG. 15A-15B** depict another fiber optic module assembly having an articulated strain relief boot and a protective cover;
**FIG. 16** shows still another fiber optic module assembly featuring the articulated strain relief boot in a perpendicular orientation;
**FIGS. 17A-E** are various embodiments of fiber optic cable assemblies attached to the fiber optic module assembly;
**FIG. 18** schematically depicts a high fiber count trunk cable furcated into fiber optic module assemblies; and
**FIG. 19** schematically depicts another high fiber count trunk cable furcated into fiber optic module assemblies.

### DETAILED DESCRIPTION

Reference will now be made in detail to various embodiments of the fiber optic module assembly, examples of which are illustrated in the accompanying drawings. Whenever possible, like reference numbers will be used to refer to like components or parts.

The disclosure herein is to a fiber optic module assembly having at least one fiber optic cable assembly, a housing assembly for receiving a portion of the fiber optic cable assembly and a pulling feature. Typically, the craft pulls the fiber optic module assembly from a first location to a second location to facilitate installation. For instance, the first and second locations may be a Main Distribution Area (MDA), a Zone Distribution Area (ZDA) or an Equipment Distribution Area (EDA) in a data center. In some embodiments the first location may be a region in a data center and the second location may be removed from the data center and more proximate to an end user, such as a mounting structure in a Network Interface Device (NID) closet located on a different floor or in a different part of a building, requiring the use of vertical or horizontal ducts. In some embodiments, the fiber optic module assemblies may be pulled through ducts having a cross sectional area of 9 square inches (about 58 square centimeters) or greater from a first location to a second location. This area represents a cylindrical duct size of 3 inches (about 7.62 centimeters) inner diameter. Embodiments of the fiber optic module assembly may also be pulled along raceways and through subfloors in a data center, further enabling installation. To aid the craft, the fiber optic module assembly disclosed may include a pulling feature, as disclosed herein.

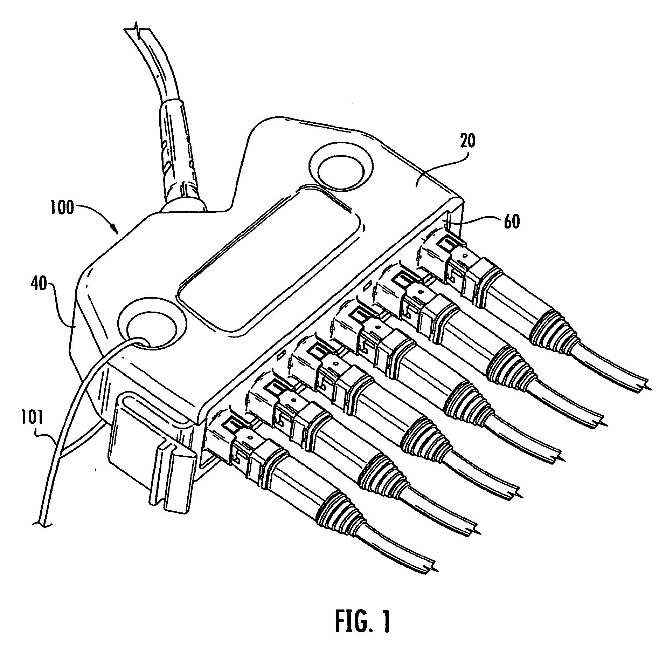

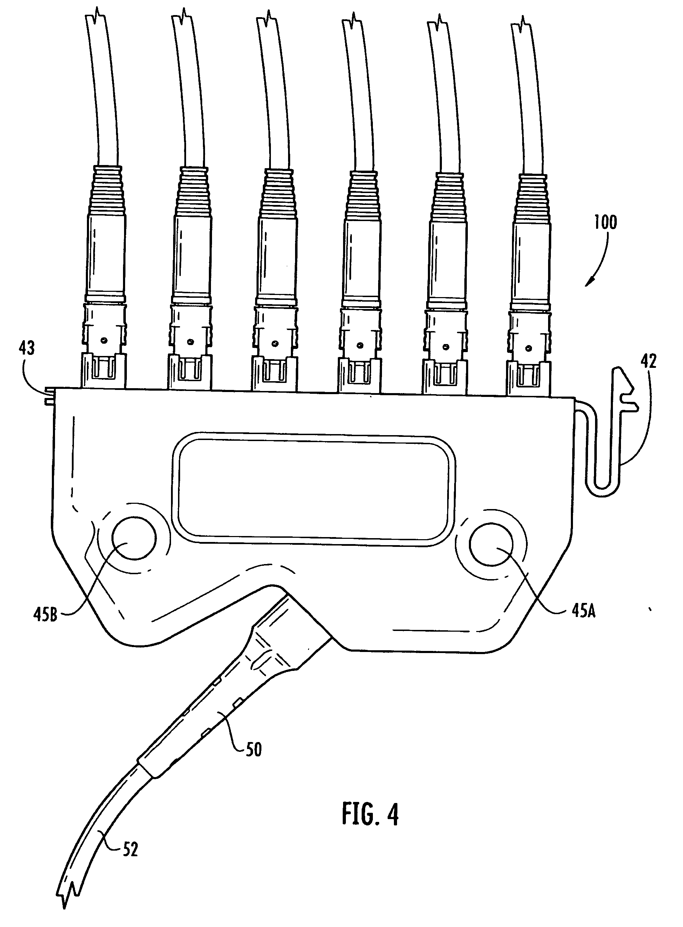

**FIG. 1** is an embodiment of a fiber optic module assembly **100** having a housing cover portion **20,** a housing receiving portion **40** and a modular connector interface assembly **60** that cooperate to define a housing assembly. Fiber optic module assembly **100** has a pulling means **101** attached to a pulling feature (not numbered) for pulling the fiber optic module assembly **100** from a first location to a second location. Pulling means **101** in the embodiment of **FIG. 1** is a tape, but in other embodiments the pulling means can be a strap, a lanyard, a wire, a cable, or the like. As best shown in **FIG. 4****,** the pulling feature is a through aperture pulling features **45A** and **45B.**

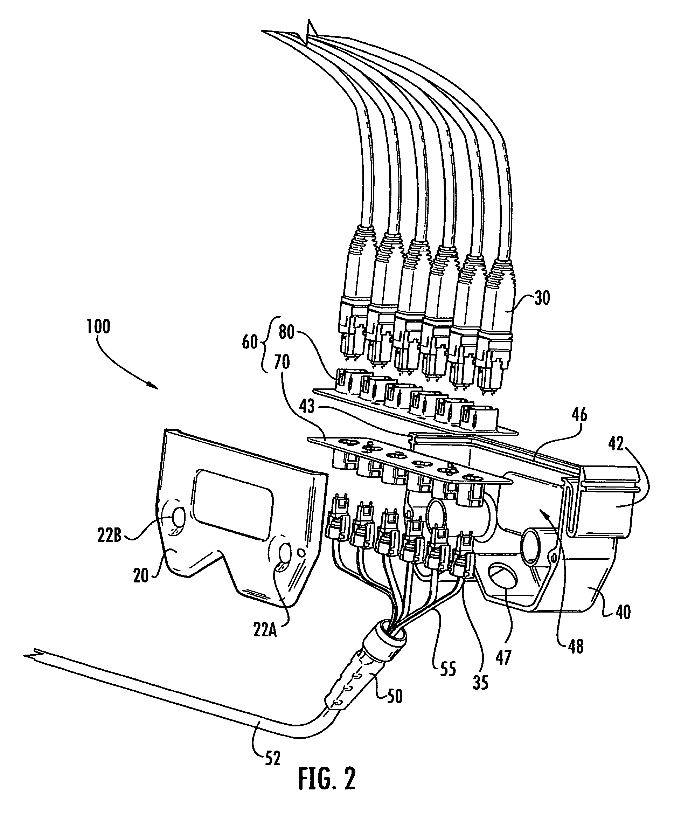

Further, **FIGS. 1-3** show at least one fiber optic cable assembly comprising a fiber optic cable **52,** at least one optical fiber **55** and at least one optical connector assembly **35** is fed through a cable receiving feature **47** into an interior cavity **48.** The interior cavity **48** is at least partially defined by housing receiving portion **40.** Interior cavity **48** is further defined by housing cover portion **20** and modular connector interface assembly **60.** A strain relief boot **50** is secured about fiber optic cable **52** and affixed to housing receiving portion **40** at the cable receiving feature **47.** **FIG. 2** also shows least one fiber optic connector assembly **30** plugged into a component of modular connector interface assembly **60.** At least one optical connector assembly **35** is plugged into another component of modular connector interface assembly **60** within interior cavity **48.** Housing cover portion **20,** housing receiving portion **40** and housing connector interface assembly **60** may be made of any suitable material, such as a polymer or a metal, and manufactured by any suitable process, such as injection molding, vacuum forming, machining, stamping and the like.

Referring to **FIGS. 2-4****,** through aperture pulling features **45A** and **45B** are at least partially defined by mating the housing cover portion **20** to the housing receiving portion **40,** more specifically mating a first hollow structure (**44A** and **44B**) attached to an interior surface of the housing receiving portion **40** to a second hollow structure (**22A** and **22B**) attached to an interior surface of the housing cover portion **20.** The inner surfaces of the first (**44A** and **44B**) and second (**22A** and **22B**) hollow structures align and are in communication with a respective exterior surface of housing receiving **40** and housing cover **20** portions, forming the through aperture pulling features **45A** and **45B.** The first (**44A** and **44B**) and second (**22A** and **22B**) hollow structures may further serve as routing features for optical fibers. A method of employing the pulling feature may be to push a fish tape from a second location, through an access portal, such as a duct, raceway or a subfloor to a first location. The fish tape is secured to the fiber optic module assembly pulling feature, then the fish tape is pulled from the first location, through the access portal to the second location until the secured fiber optic module assembly emerges. Other methods are possible and are in keeping with the scope of this disclosure.

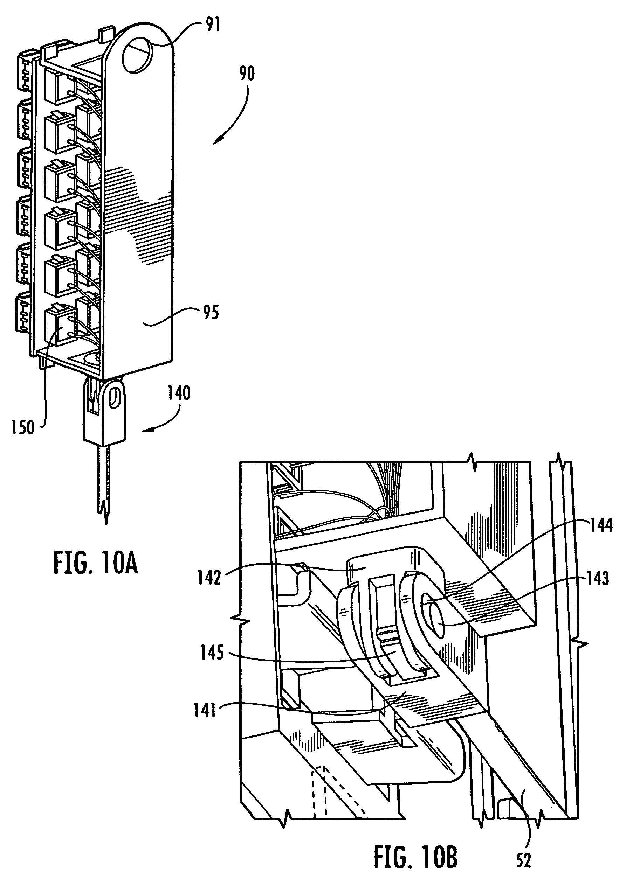

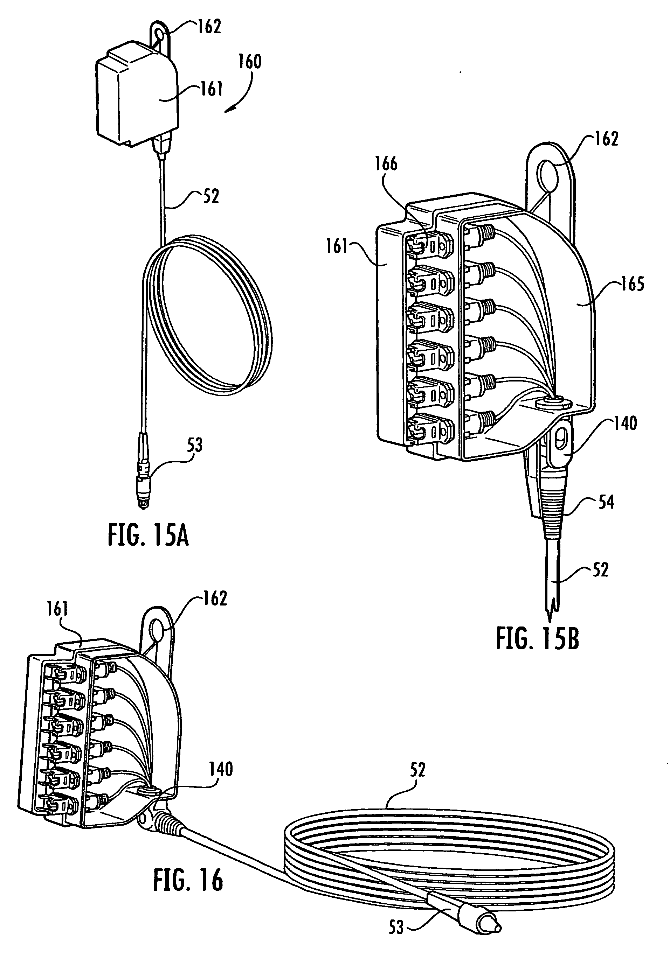

Other embodiments of the pulling feature are possible, such as shown in **FIG. 10A** and **FIG. 15A****.** Specifically, **FIG. 10A** shows a loop pulling feature **91** defined by another embodiment **90** of a fiber optic module assembly and **FIG. 15A** shows cover pulling feature **162** defined by a protective cover **161** on a further embodiment **160** of a fiber optic module assembly. Consequently, the pulling feature for the fiber optic module assembly may include a loop, a hook and a through aperture and may be incorporated on any of the embodiments.

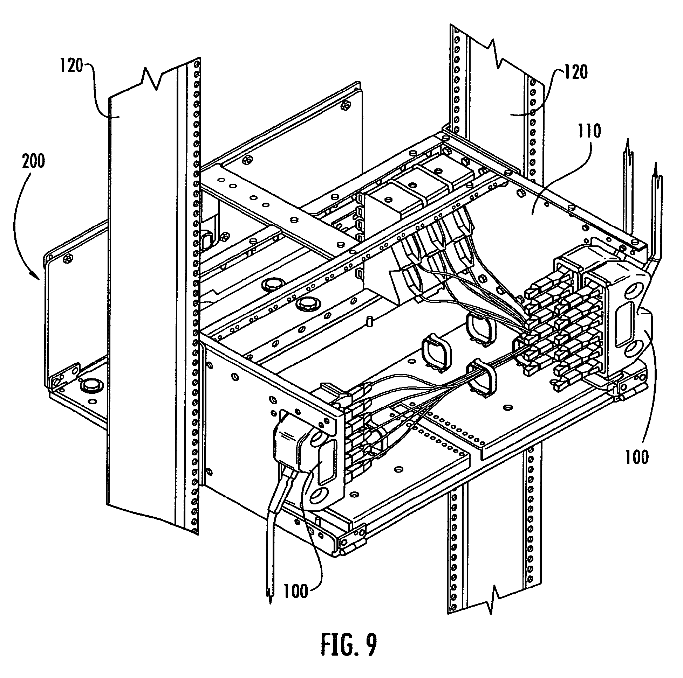

The fiber optic module assembly of the disclosure may be attached directly to any suitable mounting structure. The mounting structure may be a bracket, a box, a raceway, or the like. By way of example, the mounting structure may be a rack mounted shelf in a data center, such as a Pretium™ Rack-mountable 4U Housing, commercially available from Coming Cable Systems, LLC, for use with other fiber optic module assemblies as a patch panel. In some embodiments the fiber optic module assembly may be attached to the side or back of the rack mounted shelf to provide an optical interface for pigtailed interconnect assemblies mounted on the front of the shelf as shown in **FIG. 9****.** Additionally, the fiber optic module assembly may be installed in a vertical or a horizontal orientation.

In some embodiments the fiber optic module assembly may include a latching feature for attaching to the mounting structure. As seen in **FIGS 2-5** an embodiment of the latching feature 42 is a flexible latching member and stationary latching channel **43** defined by the housing receiving portion **40,** which cooperate to engage an appropriate aperture for securing the fiber optic module assembly. For instance, the latching feature of the fiber optic module assembly may engage a rectangular opening on a data center shelf, to attach the fiber optic module assembly **100** at the desired location. **FIG. 4** shows a side view of fiber optic module assembly **100** providing a profile view of flexible latch member **42** and stationary latching channel **43.**

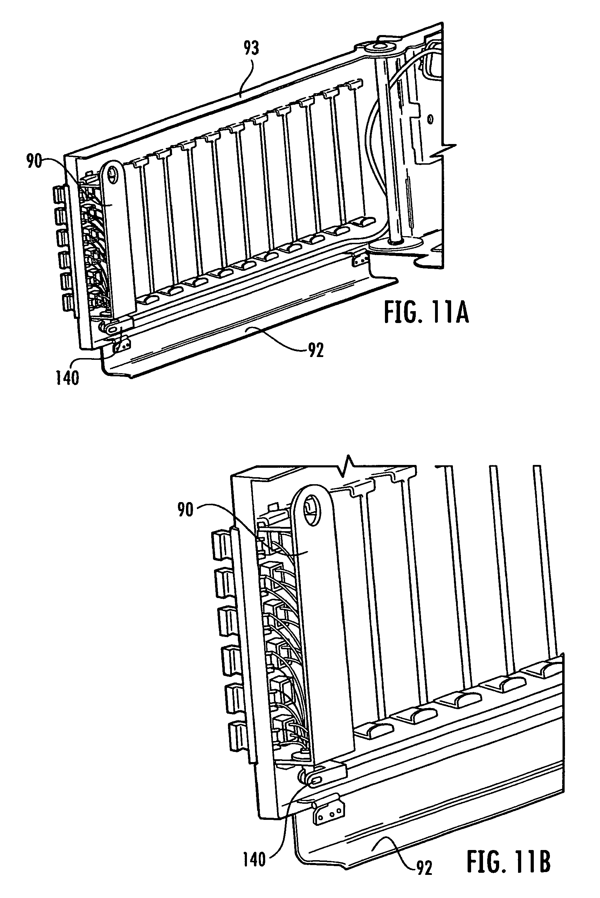

A method of attaching of the fiber optic module assembly **100** is to fit the stationary latching feature **43** over a first sheet or panel. The fiber optic module assembly **100** is then pivoted forward to flexibly engage the latching feature **42** until it engages a second sheet or panel that is a suitable distance from the first sheet or panel. Attachment of the fiber optic module assembly **100** may be in the front or rear of the shelf (see **FIG. 9** and **FIGS. 11A****-11B**) depending upon configuration of the module assembly and the requirements of the datacenter. The attachment means may further be a discrete component such as a hook, a push clip, or a strap.

The module assembly may be installed vertically, horizontally, or any suitable orientation in the front or rear of the mounting structure. **FIG. 9** shows a 4U data center shelf assembly **200** having a 4U data center shelf **110** mounted in a data center rack **120.** Multiple fiber optic module assemblies **100** are shown mounted on the side of shelf **110** with the modular connector interface assembly **60** facing into the shelf and the fiber optic cable **52** and strain relief boot **50** outside of the shelf. In this embodiment the fiber optic module assemblies **100** provide an optical interface for forward facing modules by connectorized pigtails coming from the forward facing modules, the module assemblies having six, twelve or twenty-four fiber count connectors each, for a total fiber count of 72 to 144 fibers in each module assembly. Twelve fiber optic module assemblies 100 may be installed in the front of the 4U data center shelf.

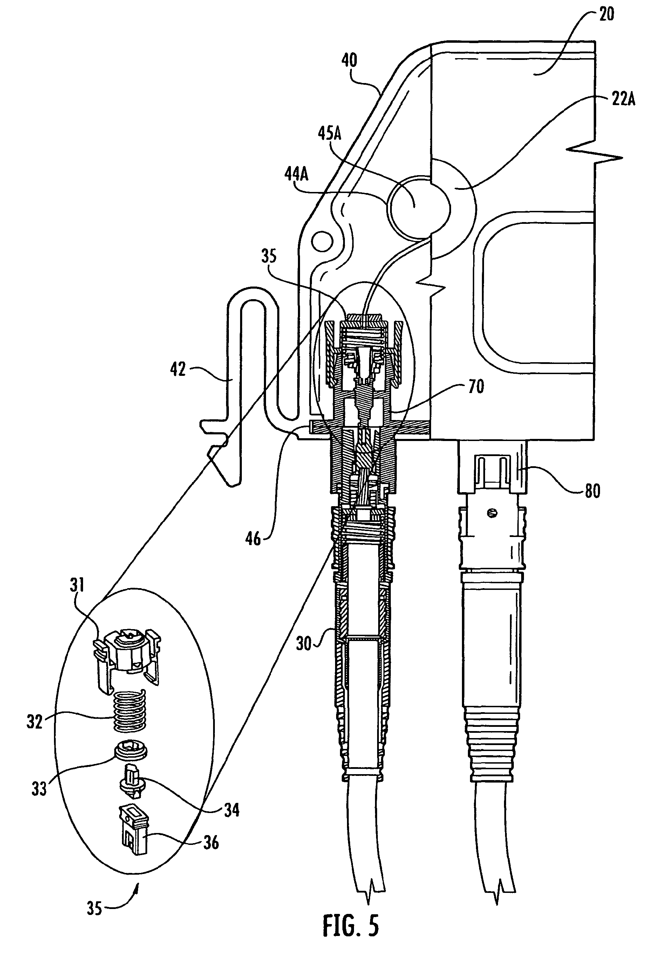

Another aspect of the disclosure is the modular connector interface assembly **60.** The fiber optic module assembly **100** removably receives the modular connector interface assembly **60.** The modular connector interface assembly **60** receives and optically mates optical connector assemblies. In some embodiments the modular connector interface assembly **60** receives and optically mates dissimilar optical connector assemblies as seen in **FIGS. 2** and **5****.** The modular connector interface assembly **60** has connector interface features that receive custom optical connector assemblies to keep the housing assembly small, further enabling pulling through ducts, raceways, etc. Simply stated, the fiber optic module assembly has a relatively small cross section to enable pulling into tight spaces.

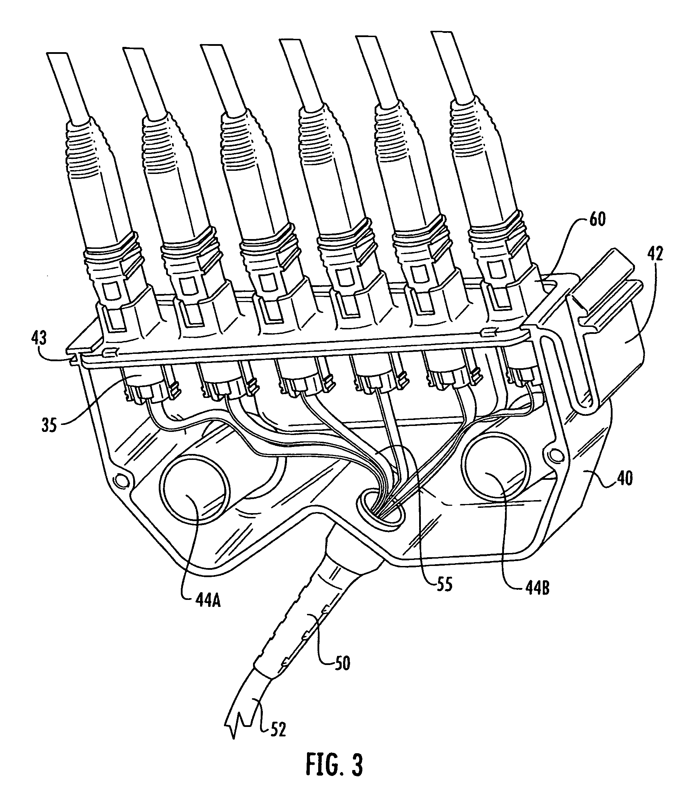

**FIG. 2** is a partially exploded view of the fiber optic module assembly **100** of **FIG. 1****.** Housing cover portion **20** serves as a lid or cover and is shaped to conform to housing receiving portion **40.** Housing cover portion **20** is secured by a securing means, such as latch tabs or screws (not pictured). The modular connector interface assembly **60** from **FIG. 1** has at least a first connector interface plate **70** and a second connector interface plate **80.** Both plates may be snapped together or interlocked, forming the modular connector interface assembly **60** that is received by a channel receiving means **46** defined by the housing receiving portion **40.** **FIG. 3** shows the fiber optic module assembly with cover portion removed and shows modular connector interface assembly **60** residing in the channel receiving means **46.** As shown in **FIG. 2****,** the channel receiving means **46** follows an inner edge of the housing receiving portion **40.** Other means of receiving the modular connector interface assembly **60** are possible, such as latches and clips, and are within the scope of this disclosure.

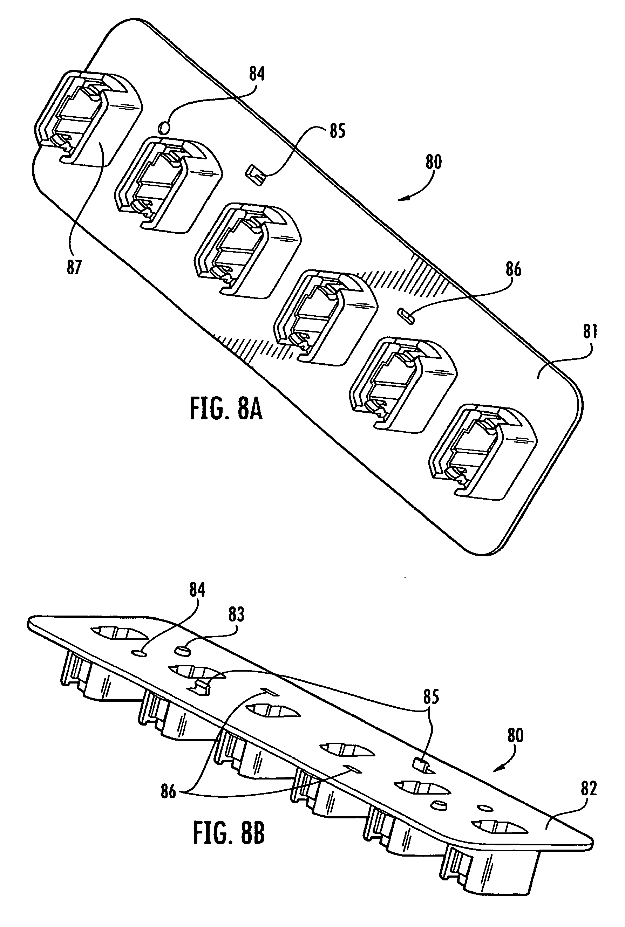

**FIG. 5** depicts a partial cutaway view of fiber optic module assembly **100.** **FIG. 5** highlights the mating of dissimilar optical connector assemblies, namely optical connector assembly **35** and fiber optic connector assembly **30.** Optical connector assembly **35** has a multi-fiber ferrule **36,** a ferrule boot **34,** an alignment cuff **33,** a force translation spring **32** and retention clip **31.** The optical connector assembly is attached to an optical fiber ribbon **55** such that it may be optically mated to a fiber optic connector assembly **30,** As shown in **FIGS. 1-5****,** fiber optic connector assembly **30** is an MTP connector, though other fiber optic connector assemblies are possible, such as MPO, LC, LC duplex, SC, SC duplex, and DC fiber optic connector assemblies. As shown in **FIG. 8A****,** connector interface plate **70** has adapter features, to engage the optical connector assembly **35** such that it may optically mate to fiber optic connector assembly **30.** A modular connector interface assembly **60** in other embodiments may have apertures to receive duplex or simplex adapter assemblies.

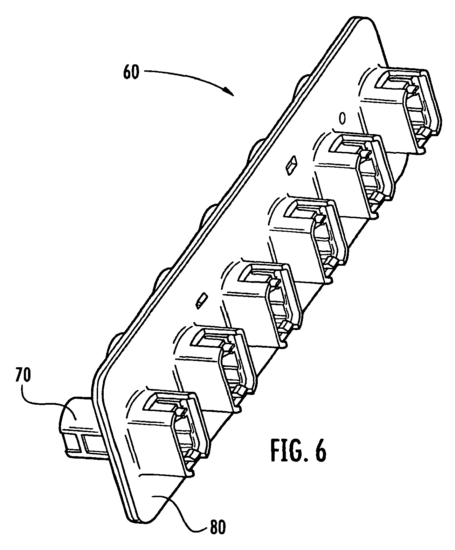

**FIG. 6** shows modular connector interface assembly **60** in more detail. The **FIG. 6** depicts the first connector interface plate **70** interlocked with the second connector interface plate **80.** Having two distinct plates allows different connector mating schemes for mating similar or dissimilar optical connector assemblies. The modular connector interface assembly **60** of the disclosure acts as the connective interface for optically connecting fiber optic connector assemblies. In yet other embodiments, the first and second connector interface plates are substantially identical to accept substantially similar optical connector assemblies.

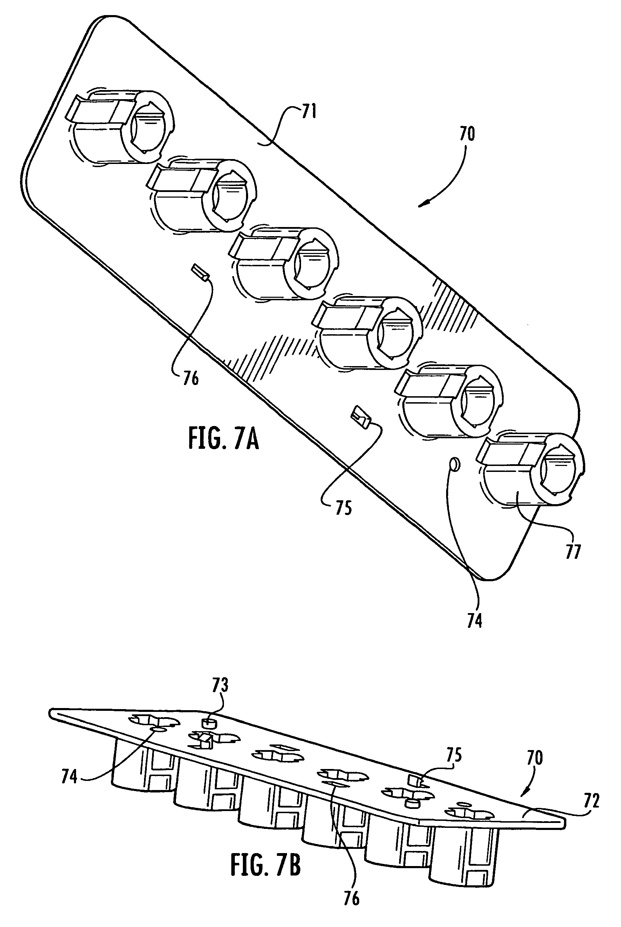

**FIGS. 7A-7B** show two perspective views of the first connector interface plate **70** configured to accept optical connector assembly **35.** **FIGS. 8A-8B** show two perspective views of the second connector interface plate **80.** Corresponding elements for each are, respectively: connector interface sides **71, 81,** for directly interfacing with optical connector assembly **35** or fiber optic connector assembly **30;** plate interface sides **72, 82,** for joining the two plates together for forming housing connector interface assembly **60;** alignment protrusions **73, 83** and alignment cavities **74, 84** that cooperate to axially align first connector element **77** to second connector element **87.** Additionally, respective plate latches **75, 85** cooperate with respective plate latch apertures **76, 86** to securely fasten the two plates together by interlocking the plate interface sides **72** and **82.**

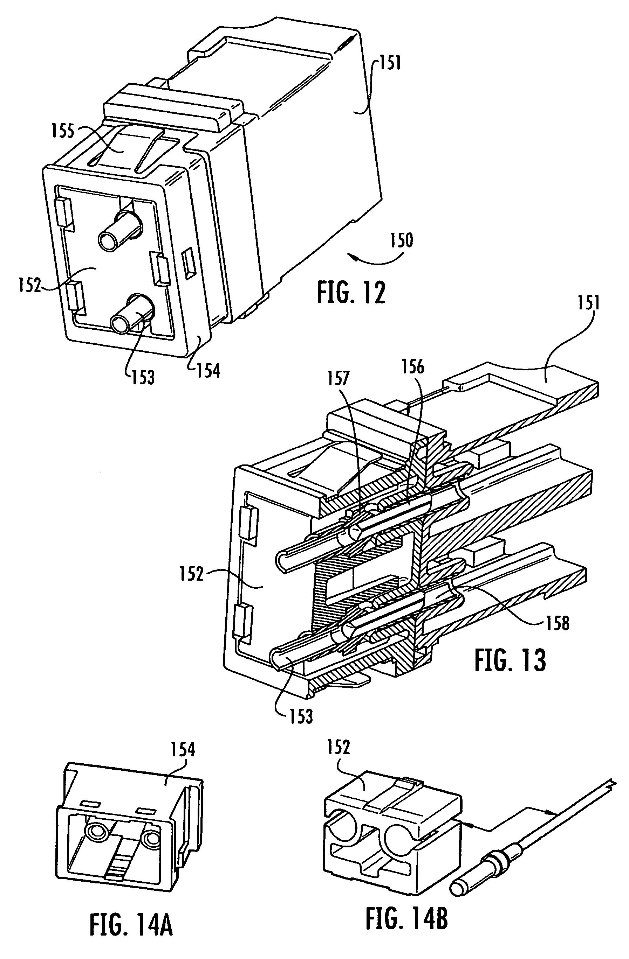

Modular connector interface assembly **60** may be an aperture plate defined by the housing receiving portion **40** for receiving a plurality of adapter assemblies. **FIG. 10A** and **10B** shows smaller alternate housing receiving portion **95** housing a plurality of optical connector-adapter assemblies **150.** **FIGS. 12** and **13** show the optical connector-adapter assembly **150,** the assembly comprising a connector-adapter housing assembly, formed from mating a duplex adapter half **151** and an optical connector-adapter half **154.** The optical connector-adapter assembly houses an optical connector-adapter insert **152** and a pair of ceramic ferrule alignment sleeves **158.** A pair of ferrules **156** in ferrule holders **157** are encased within the optical connector-adapter insert. Fiber protective sleeve **153** facilitates receiving an optical fiber. For example, the ferrules in this embodiment are LC ceramic ferrules, though other single fiber ferrules are within the scope of this disclosure. Ferrules **156** are inserted into the ceramic alignment sleeves **158** for axially aligning with corresponding ferrules from optical connector assemblies. An adapter retention clip **155** holds the optical connector-adapter assembly **150** within an aperture in the smaller alternate housing receiving portion **95.**

However, in other embodiments the modular connector interface assembly **60** may have apertures to accept duplex or simplex adapters in a more conventional arrangement as shown in **FIG. 11A** to **FIG. 16****.**

Another aspect of the disclosure is directed to a fiber optic module assembly including an articulated strain relief boot. As shown in **FIG. 10A****,** the articulated strain relief boot is on an opposite end from the pulling feature to further enable pulling the fiber optic module assembly during installation by transferring a pulling force through the housing assembly to the articulated strain relief boot. A mounting structure having limited vertical attachment space will benefit from the fiber optic module assembly having an articulated strain relief boot that pivots or bends near the housing assembly This reduces the effective vertical footprint of the fiber optic module assembly while maintaining linear alignment for pulling. Further, by also rotating around an axis of egress into the housing assembly, the articulated strain relief boot assists the craft in placing the fiber optic cable in a more advantageous position for cable management. This is further facilitated by use of bend insensitive fiber, such as ClearCurve® Multimode fiber, commercially available from Coming Incorporated, as well as other optical fibers having improved bending performance.

Front attachment of an embodiment of a fiber optic module assembly having an articulated strain relief boot **140** is shown in **FIG. 10A****.** Articulated strain relief boot **140** in this embodiment has a module portion for engaging the fiber optic module assembly and a cable portion for engaging the fiber optic cable. The module portion pivots relative to the cable portion at a pivot point. A pulling force applied to the pulling feature, shown in **FIG. 10A** to be a loop pulling feature **91,** is directed linearly through a long axis of the fiber optic module assembly to the fiber optic cable assembly. A smaller alternate housing receiving portion 95 houses a plurality of optical connector-adapter assemblies **150.** **FIG. 10B** shows detailed view of the articulated strain relief boot **140,** which is an articulated strain relief boot **140** assembly having a cable component **141** and a module component **142.** Cable component **141** is attached to fiber optic cable **52** and has pivot point **143** that attaches to a translation slot **144** found on the module component **142.** Pivot point **143** resides in the translation slot **144.** An articulated boot lock latch **145** provides a locking detent to stop and lock bending at about 90 degrees (installed position). Once released, articulated boot lock latch **145** allows cable component **141** to translate the length of translation slot **144** axially in line with the fiber optic cable, whereby it can freely bend until the assembly is substantially straight (pulling position). The articulated strain relief boot **140** provides a pivotable conduit or through passage for the optical fibers therein and does not allow the optical fibers inside to bend below a minimum bend radius for the optical fiber used. The optical fibers residing inside the pivotable conduit may translate into and out of the interior cavity as the articulated strain relief boot pivots. Module component **142** is secured to cable receiving feature **47** and rotates in a limited arc, from 0 degrees to about 360 degrees and back to 0 degrees, thereby preventing overly twisting the optical fibers and causing physical damage to the optical fibers therein.

**FIGS. 11A** and **11B** show two views of an alternate embodiment **90** of the fiber optic module assembly mounted on a front of a mounting structure, in this embodiment a 4U data center shelf with a swinging front panel **93** (further enabled by bend insensitive optical fiber). Alternate embodiment **90** has the articulate strain relief boot **140** assembly is attached to the swinging front panel **93,** with articulated strain relief boot **140** in the installed position. Cable gather **92** prevents fiber optic cable **52** from dangling below the level of the floor of the 4U data center shelf.

Another **160** fiber optic module assembly is shown in **FIG. 15A** having fiber optic cable **52** connectorized by rugged connector **53.** **FIG. 15B** reveals the interior **165** of another **160** fiber optic module assembly having partial MTP connectors installed within MTP adapters **166.** Articulated strain relief boot **140** is housed by protective cover **161** and is shown in the pulling position. A flexible strain relief boot **54** is attached to articulated strain relief boot **140** to further enhance strain relief to the fiber optic cable. **FIG. 16** shows the further alternate embodiment **160** with articulated strain relief boot **140** in the installed position.

Installation of any embodiment of the fiber optic module assembly, herein described using fiber optic module assembly **100,** is enhanced by the ability of the module assembly to be pulled from a first location to a second location. A pulling means may be routed through ducts, raceways and subfloors and attached to the at least one pulling feature. A pulling force may be applied on the opposite end of the pulling means for drawing the fiber optic module assembly along from a first location to a second location. Once at the second location, which may be a mounting structure, such as a rack mounted shelf, the pulling means is removed. The articulated strain relief boot **140** may be disengaged from the pulling position and pivoted up to plus or minus 90 degrees in an appropriate direction to an installed position. This places the fiber optic cable in a more advantageous position for cable management. Additionally, the articulated strain relief boot **140** may be rotated up to 360 degrees in either a clockwise or counter-clockwise direction until the craft determines the best attitude for the particular application for cable management. The fiber optic module assembly **100** may then be attached to any suitable mounting structure. The attachment may be by a latching feature 42 defined by the fiber optic module assembly comprising a flexible latching member and stationary latching channel **43,** or it may be a discrete attachment means such as a hook, a push clip, or a strap.

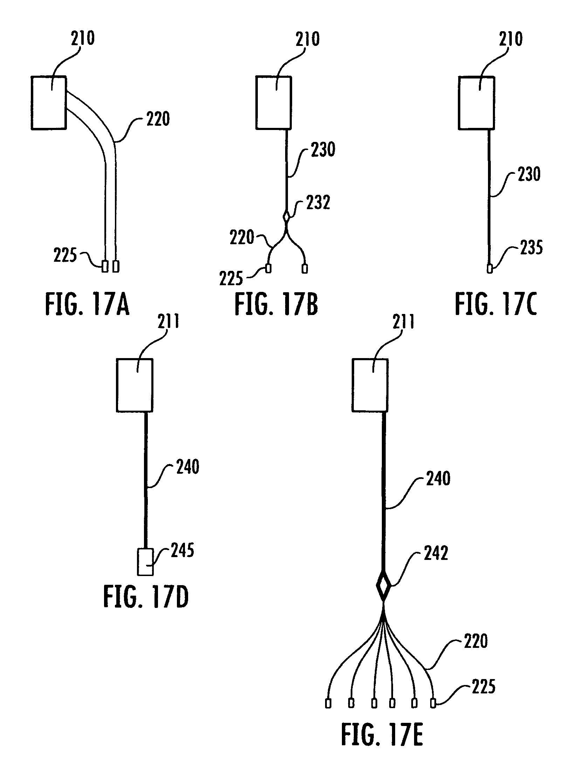

The fiber optic module assembly of the disclosure supports many cable configurations. **FIGS. 17A** to **17E** are sample embodiments. A 24 fiber, fiber optic module assembly **210** in **FIG. 17A** has two 12 fiber cables **220** attached to the "rear" of the assembly, though they may exit from the "bottom" (not shown). 12 fiber optical connectors **225** are on the opposite ends of the cables **220.** **FIG. 17B** has a 24 fiber cable **230,** being furcated into two cables by 24 fiber to 12 fiber furcation **232** into two 12 fiber cables, terminated by 12 fiber connectors **225.** **FIG. 17C** has 24 fiber cable **230** attached to the 24 fiber, fiber optic module assembly **210** and being terminated by 24 fiber connector **235.** **FIG. 17D** has high density interconnect assembly **211** with **72** fiber cable **240** terminated by a single high density 72 fiber connector **245.** **FIG. 17E** is similar to **FIG. 17D** except that 72 fiber cable **240** is furcated into six cables by 72 fiber to 12 fiber furcation **242,** each 12 fiber cable **220** being terminated by 12 fiber connector **225.** The above recitation is in no way the limit of the cable configurations that may be employed by the interconnect assembly of the disclosure and other embodiments are within the scope of the disclosure.

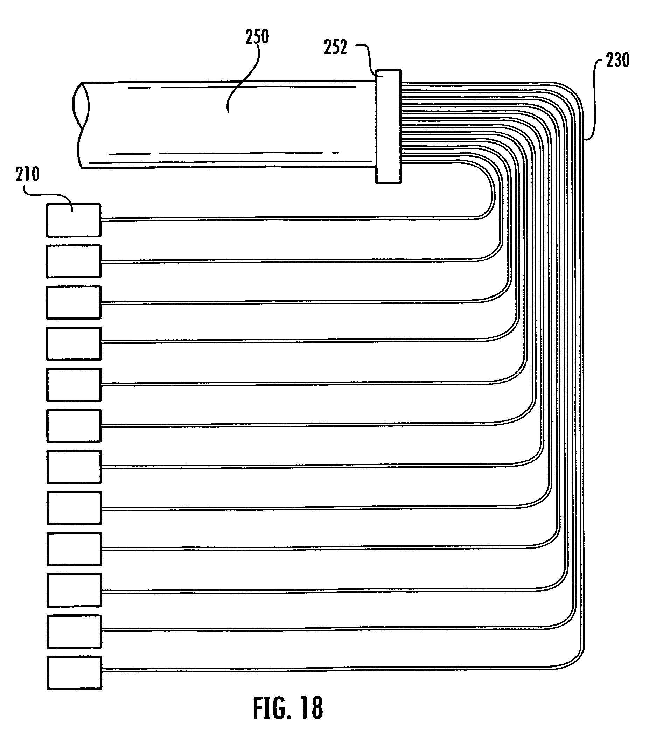

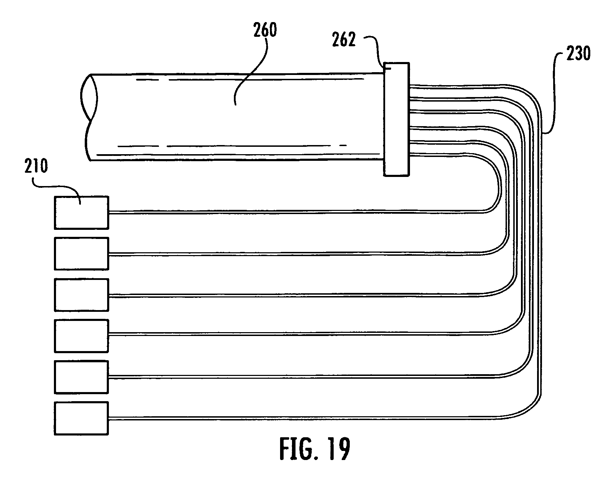

**FIGS. 18** and **19** schematically show other embodiments using 24 fiber interconnect assembly **210,** namely as terminations to large, furcated trunk cables. **FIG. 18** has 288 fiber cable **250** with 288 fiber to 24 fiber furcation **252.** The furcation results in 12, 24 fiber cables **230,** each having a 24 fiber interconnect assembly **210.** Similarly, **FIG. 19** has a 144 fiber cable **260** with 144 fiber to 24 fiber furcation **262.** The furcation results in 6, 24 fiber cables **230,** each having a 24 fiber interconnect assembly **210.**

It will be apparent to those skilled in the art that various modifications and variations can be made to elements of the disclosure. Since modifications, combinations, sub-combinations and variations of the disclosed embodiments may occur to persons skilled in the art, the disclosure should be construed to include everything within the scope of the appended claims.

## Claims

1. A fiber optic module assembly (100), comprising:
a fiber optic cable assembly, the fiber optic cable assembly having a fiber optic cable (52), at least one optical fiber (55), and at least one optical connector assembly (35) on an end of the at least one optical fiber (55);
a housing receiving portion (40, 95), wherein the housing receiving portion (40, 95) defines an interior cavity (48) and an exterior surface, the exterior surface defining a pulling feature (45A, 45B, 91, 162) on an end of the housing receiving portion (40, 95) and a cable receiving feature on a substantially opposite end of the housing receiving portion (40, 95) for receiving a portion of the fiber optic cable assembly into the interior cavity;
a housing cover portion (20);
a modular connector interface assembly (60), wherein the modular connector interface assembly (60) is received by at least the housing receiving portion (40, 95), the modular connector interface assembly capable of receiving a plurality of optical connector assemblies,
**characterized in that**
the modular connector interface assembly (60) comprises a first connector interface plate (70) receiving at least one first optical connector assembly and a second connector interface plate (80) receiving at least one second optical connector assembly, wherein the at least one second optical connector assembly is optically mated to the at least one first optical connector assembly, wherein the first and second connector interface plates (70, 80) have a plate interface side (72, 82) and a connector interface side (71, 81), and wherein the first and second connector interface plates (70, 80) mate along the respective plate interface sides (72, 82); and
the fiber optic module assembly (100) further comprises at least one latching feature (42,43).

2. The fiber optic module assembly of claim 1, the assembly further comprising an articulated strain relief boot (140), wherein the articulated strain relief boot assembly (140) pivots up to 180 degrees and rotates up to 360 degrees.

3. The fiber optic module assembly of claim 1 or 2, wherein the at least one optical connector assembly is an optical connector-adapter assembly (150), comprising a connector-adapter housing assembly receiving at least a ferrule (156) in a ferrule holder (157) on an optical fiber.

4. The fiber optic module assembly of claims 1-3, wherein the pulling feature (45A, 45B, 91, 162) is selected from the group consisting of a loop, a hook and a through aperture.

5. The fiber optic module assembly of claims 1-4, wherein the fiber optic cable assembly is secured to the cable receiving feature (47).

6. The fiber optic module assembly of claims 1-5, wherein the plurality of optical connector assemblies (35) is selected from the group consisting of MTP, MPO, LC, LC duplex, SC, SC duplex, and DC fiber optic connector assemblies.

7. The fiber optic module assembly of claims 1-6, wherein the fiber optic module assembly is attached to a mounting structure.

## Patentansprüche

1. Glasfasermodulanordnung (100), die umfasst:
eine Glasfaserkabelanordnung, wobei die Glasfaserkabelanordnung ein Glasfaserkabel (52), mindestens eine Glasfaser (55) und mindestens eine optische Verbinderanordnung (35) an einem Ende der mindestens einen Glasfaser (55) aufweist;
einen Gehäuseaufnahmeabschnitt (40, 95), wobei der Gehäuseaufnahmeabschnitt (40, 95) einen inneren Hohlraum (48) und eine Außenfläche bildet, wobei die Außenfläche eine Ziehvorrichtung (45A, 45B, 91, 162) an einem Ende des Gehäuseaufnahmeabschnitts (40, 95) bildet und eine Kabelaufnahmevorrichtung an einem im Wesentlichen gegenüberliegenden Ende des Gehäuseaufnahmeabschnitts (40, 95) zum Aufnehmen eines Abschnitts der Glasfaserkabelanordnung in dem inneren Hohlraum bildet;
einen Gehäuseabdeckabschnitt (20);
eine modulare Verbinder-Schnittstellenanordnung (60), wobei die modulare Verbinder-Schnittstellenanordnung (60) zumindest von dem Gehäuseaufnahmeabschnitt (40, 95) aufgenommen ist, wobei die modulare Verbinder-Schnittstellenanordnung in der Lage ist, eine Vielzahl von optischen Verbinderanordnungen aufzunehmen;
**dadurch gekennzeichnet, dass**
die modulare Verbinder-Schnittstellenanordnung (60) eine erste Verbinder-Schnittstellenplatte (70), die mindestens eine erste optische Verbinderanordnung aufnimmt, und eine zweite Verbinder-Schnittstellenplatte (80), die mindestens eine zweite optische Verbinderanordnung aufnimmt, umfasst, wobei die mindestens eine zweite optische Verbinderanordnung optisch mit der mindestens einen ersten optischen Verbinderanordnung zusammenpasst, wobei die erste und die zweite Schnittstellenplatte (70, 80) eine Platten-Schnittstellenseite (72, 82) und eine Verbinder-Schnittstellenseite (71, 81) aufweisen und wobei die erste und die zweite Verbinder-Schnittstellenplatte (70, 80) entlang den jeweiligen Platten-Schnittstellenseiten (72, 82) zusammengreifen; und
die Glasfasermodulanordnung (100) ferner mindestens eine Verrastungsstruktur (42, 43) umfasst.

2. Glasfasermodulanordnung nach Anspruch 1, wobei die Anordnung ferner eine angelenkte Zugentlastungkralle (140) umfasst, wobei die angelenkte Zugentlastungskrallenanordnung (140) um bis zu 180 Grad geschwenkt wird und sich um bis zu 360 Grad dreht.

3. Glasfasermodulanordnung nach Anspruch 1 oder 2, wobei die mindestens eine optische Verbinderanordnung eine optische Verbinder-Adapter-Anordnung (150) ist, die eine Verbinder-Adapter-Gehäuseanordnung umfasst, welche mindestens eine Klemmhülse (156) in einer Klemmhülsenhalterung (157) an einer Glasfaser aufnimmt.

4. Glasfasermodulanordnung nach Anspruch 1-3, wobei die Ziehvorrichtung (45A, 45B, 91, 162) aus der Gruppe bestehend aus einer Schlaufe, einem Haken und einer Durchgangsöffnung ausgewählt ist.

5. Glaserfasermodulanordnung nach Anspruch 1-4, wobei die Glasfaserkabelanordnung an der Kabelaufnahmevorrichtung (47) gesichert ist.

6. Glaserfasermodulanordnung nach Anspruch 1-5, wobei die Vielzahl von optischen Verbinderanordnungen (35) aus der Gruppe bestehend aus MTP, MPO, LC, LC-Duplex, SC, SC-Duplex und DC-Glasfaserverbinderanordnungen ausgewählt ist.

7. Glasfasermodulanordnung nach Anspruch 1-6, wobei die Glasfasermodulanordnung an einer Montagestruktur angebracht ist.

## Revendications

1. Ensemble de module à fibre optique (100), comprenant :
un ensemble de câble à fibre optique, l'ensemble de câble à fibre optique comportant un câble à fibre optique (52), au moins une fibre optique (55) et au moins un ensemble de connecteur optique (35) à une extrémité de l'au moins une fibre optique (55) ;
une partie de réception de boîtier (40, 95), où la partie de réception de boîtier (40, 95) définit une cavité intérieure (48) et une surface extérieure, la surface extérieure définissant un élément de traction (45A, 45B, 91, 162) sur une extrémité de la partie de réception de boîtier (40, 95) et un élément de réception de câble sur une extrémité sensiblement opposée de la partie de réception de boîtier (40, 95) pour recevoir une partie de l'ensemble de câble à fibre optique dans la cavité intérieure ;
une partie de couvercle de boîtier (20) ;
un ensemble d'interface de connecteur modulaire (60), où l'ensemble d'interface de connecteur modulaire (60) est reçu par au moins la partie de réception de boîtier (40, 95), l'ensemble d'interface de connecteur modulaire étant apte à recevoir une pluralité d'ensembles de connecteur optique,
**caractérisé en ce que**
l'ensemble d'interface de connecteur modulaire (60) comprend une première plaque d'interface de connecteur (70) recevant au moins un premier ensemble de connecteur optique et une seconde plaque d'interface de connecteur (80) recevant au moins un second ensemble de connecteur optique, où l'au moins un second ensemble de connecteur optique est optiquement accouplé à l'au moins un premier ensemble de connecteur optique, où les première et seconde plaques d'interface de connecteur (70, 80) ont un côté d'interface de plaque (72, 82) et un côté d'interface de connecteur (71, 81), et où les première et seconde plaques d'interface de connecteur (70, 80) s'accouplent le long des côtés d'interface de plaque respectifs (72, 82) ; et
l'ensemble de module à fibre optique (100) comprend en outre au moins un élément de verrouillage (42, 43).

2. Ensemble de module à fibre optique selon la revendication 1, l'ensemble comprenant en outre une tétine articulée de réduction de tension (140), où l'ensemble de tétine articulée de réduction de tension (140) peut pivoter jusqu'à 180 degrés et peut tourner jusqu'à 360 degrés.

3. Ensemble de module à fibre optique selon la revendication 1 ou la revendication 2, dans lequel l'au moins un ensemble de connecteur optique est un ensemble de connecteur-adaptateur optique (150), comprenant un ensemble de boîtier de connecteur-adaptateur recevant au moins une ferrule (156) dans une monture de ferrule (157) sur une fibre optique.

4. Ensemble de module à fibre optique selon les revendications 1 à 3, dans lequel l'élément de traction (45A, 45B, 91, 162) est sélectionné dans le groupe constitué des éléments suivants : une boucle, un crochet et une ouverture traversante.

5. Ensemble de module à fibre optique selon les revendications 1 à 4, dans lequel l'ensemble de câble à fibre optique est fixé à l'élément de réception de câble (47).

6. Ensemble de module à fibre optique selon les revendications 1 à 5, dans lequel la pluralité d'ensembles de connecteur optique (35) est sélectionnée dans le groupe constitué des ensembles de connecteur de fibre optique MTP, MPO, LC, LC duplex, SC, SC duplex et DC.

7. Ensemble de module à fibre optique selon les revendications 1 à 6, dans lequel l'ensemble de module à fibre optique est fixé à une structure de montage.
